# EUROPEAN PATENT SPECIFICATION

(11) **EP 3 852 240 B1**
(45) Date of publication and mention of the grant of the patent: **25.11.2026**
(21) Application number: 20216374.7
(22) Date of filing: 22.12.2020
(51) Int. Cl.: H02K 1/20, H02K 3/24

(54) **A STATOR FOR AN ELECTRIC MOTOR**
EIN STATOR FÜR EINEN ELEKTROMOTOR
UN STATOR POUR MOTEUR ÉLECTRIQUE

(30) Priority: 14.01.2020 US 202016742688
(43) Date of publication of application: 21.07.2021
(73) Proprietor: Hamilton Sundstrand Corporation, Charlotte, NC 28217-4578 (US)
(72) Inventor: SAVIERS, Kimberly Rae, Glastonbury, CT 06033 (US); RANJAN, Ram, West Hartford, CT 06117 (US); TANGUDU, Jagadeesh Kumar, South Windsor, CT 06074 (US)
(74) Representative: Dehns

(56) References cited:
- WO-A1-2019/183657
- WO-A1-99/17422
- DE-A1- 10 348 214
- US-A1- 2019 207 457

## Description

### BACKGROUND

The present invention relates to an electric motor, and more particularly, to a stator assembly that can cool an electric motor.

Traditional electric motors may include a stator, a rotor, with electrical motor windings in the stator that, when energized, drive rotation of the rotor about a central axis. Heat is generated in the motor windings, which are located in slots in the stator. The windings are separated from the exterior of the motor by layers of insulation and laminated steel, which makes up the stator. These contributors to internal thermal resistance limit the allowable heat generation and thus the allowable electrical current in the windings. The energy density of an electric motor is typically limited by heat dissipation from the motor windings of the stator. The requirement to be met is a maximum hot spot temperature in the motor windings that is not to be exceeded. Conventional motor thermal management includes natural convection from large fins on the outside of a motor jacket, or liquid cooling in motor jacket. Both of these solutions undesirably add volume to the motor, due to the addition of the jacket. WO 2019/183657 A1, WO 99/17422 A1, DE 10348214 A1, and US 2019/207457 A1 disclose stators for electric machines.

### BRIEF DESCRIPTION

In a first aspect there is provided a stator of an electric motor according to claim 1.

The plurality of non-electrically conductive cooling channels may be formed from a polymeric material.

In a second aspect there is provided an electric motor according to claim 3.

In a third aspect there is provided a method of forming a stator of an electric motor according to claim 4.

The inlet header or the outlet header may be secured to the plurality of cooling channels via an epoxy material.

One or more of the plurality of cooling channels, the inlet header or the outlet header may be formed by one or more additive manufacturing processes.

One of the inlet header or the outlet header may be formed together with the plurality of cooling channels prior to installation of the plurality of cooling channels into the stator core.

### BRIEF DESCRIPTION OF THE DRAWINGS

Various features will become apparent to those skilled in the art from the following detailed description of the disclosed non-limiting embodiments. The drawings that accompany the detailed description can be briefly described as follows:
FIG. 1 is a partial view of an electric motor;
FIG. 2 is a cross-sectional view of a stator core;
FIG. 3a and 3b schematically illustrate installation of a stator winding to a stator core;
FIG. 4 is a partial perspective view of a stator;
FIG. 5 is another partial perspective view of a stator;
FIG. 6 is yet another partial perspective view of a stator;
FIG. 7 is an axial side view of a stator; and
FIG. 8 is a flow chart illustrating an exemplary method of forming a stator.

### DETAILED DESCRIPTION

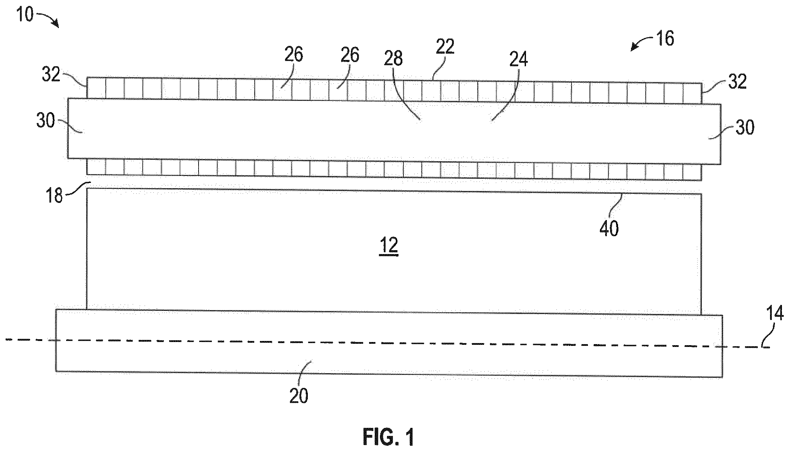

Referring to FIG. 1, an embodiment of an electric motor 10 is illustrated. The electric motor 10 includes a rotor 12 configured to rotate about a rotation axis 14. A stator 16 is located radially outboard of the rotor 12 relative to the rotation axis 14, with a radial air gap 18 located between the rotor 12 and the stator 14. In some embodiments, the rotor 12 is mounted on a shaft 20. The rotor 12 and the shaft 20 may be fixed together such that the rotor 12 and the shaft 20 rotate about the rotation axis 14 together as one piece.

The stator 16 includes a stator core 22 in which a plurality of electrically conductive stator windings 24 are disposed. In some embodiments, such as shown in FIG. 1, the stator core 22 is formed from a plurality of axially stacked laminations 26, which are stacked along the rotation axis 14. In some embodiments, the laminations 26 are formed from a steel material, but one skilled in the art will readily appreciate that other materials may be utilized. The stator winding 24 include core segments 28 extending through the stator core 22 and end turn segments 30 extending from each axial stator end 32 of the stator core 22 and connecting circumferentially adjacent core segments 28. When the stator windings 24 are energized via an electrical current therethrough, the resulting field drives rotation of the rotor 12 about the rotation axis 14.

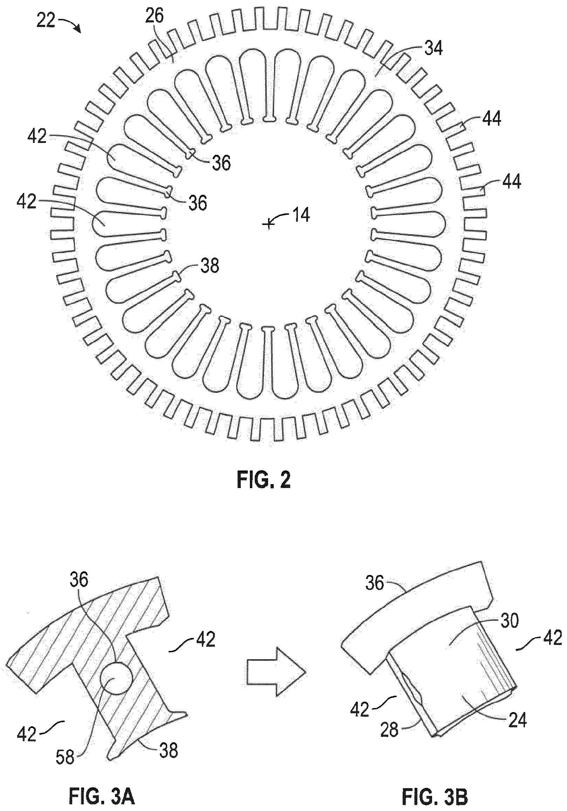

Referring now to FIG. 2, shown is an axial cross-sectional view of the stator core 22. Each lamination 26 of the stator core 22 includes a radially outer rim 34 with a plurality of stator teeth 36 extending radially inwardly from the outer rim 34 toward the rotation axis 14. Each of the stator teeth 36 terminate at a tooth tip 38, which, together with a rotor outer surface 40 (shown in FIG. 1) of the rotor 12, may define the radial air gap 18. Circumferentially adjacent stator teeth 36 define an axially-extending tooth gap 42 therebetween. Further, in some embodiments, a plurality of stator fins 44 extend radially outwardly from the outer rim 34. Referring to FIG. 3a and 3b, stator windings 24 are installed to the stator core 22 by wrapping the stator windings 24 on the stator teeth 36. In some embodiments, an insulation layer is applied to the stator core 22 prior to installation of the stator windings 24. The wrapping of the stator windings 24 over the stator teeth 36 defines the core segments 28 extending through the stator core 22 along the tooth gaps 42, and further defines the end turn segments 30 of the stator windings 24 at each axial stator end 32. The stator windings 24 are configured such that two core segments 28 occupy each tooth gap 42.

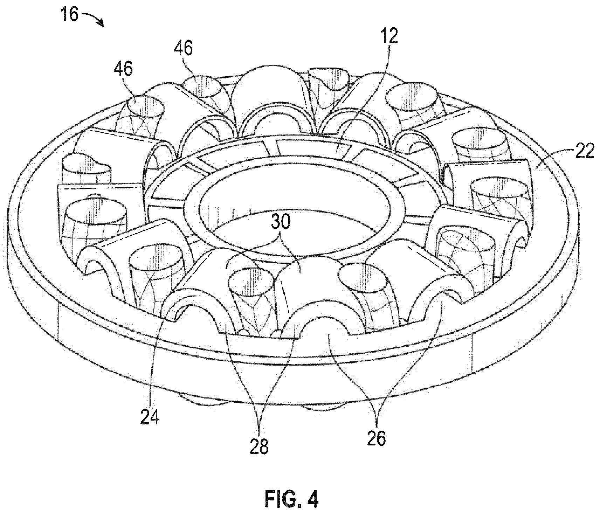

Referring now to the perspective view of the stator 16 in FIG. 4, to enhance cooling of the stator 16, a plurality of cooling channels 46 extend axially through the stator 16 in the tooth gaps 42 between circumferentially adjacent stator teeth 36, and further between circumferentially adjacent core segments 28 of the stator winding 24 located in the tooth gap 42. A cooling fluid flow, schematically shown as 48, is directed through the cooling channels 46 to more directly and more efficiently cool the stator windings 24. In some embodiments, the plurality of cooling channels 46 contact the plurality of stator windings 24. The cooling channels 46 are multiple cooling channels 46 distributed throughout the stator windings 24. As shown in FIG. 4, cooling channels 46 are included in each tooth gap 42. Further, cooling channel cross-sectional area of the cooling channels 46 may vary around the circumference of the stator 16, and likewise cross-sectional areas of the cooling channels 46 may vary axially along their length.

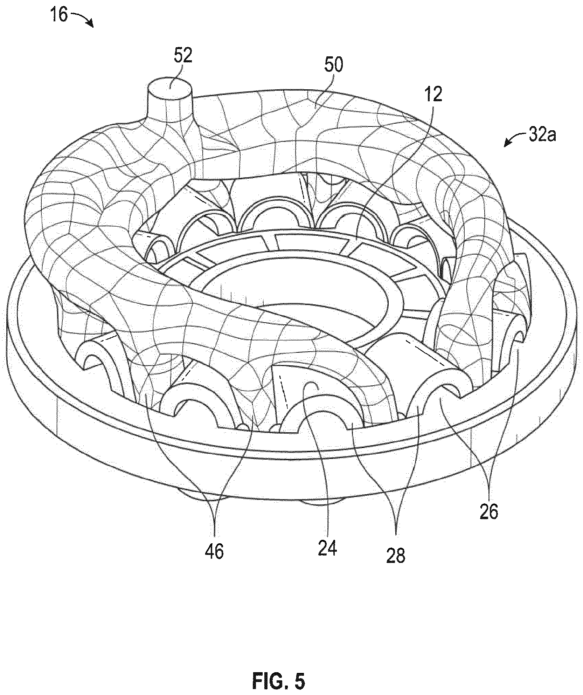

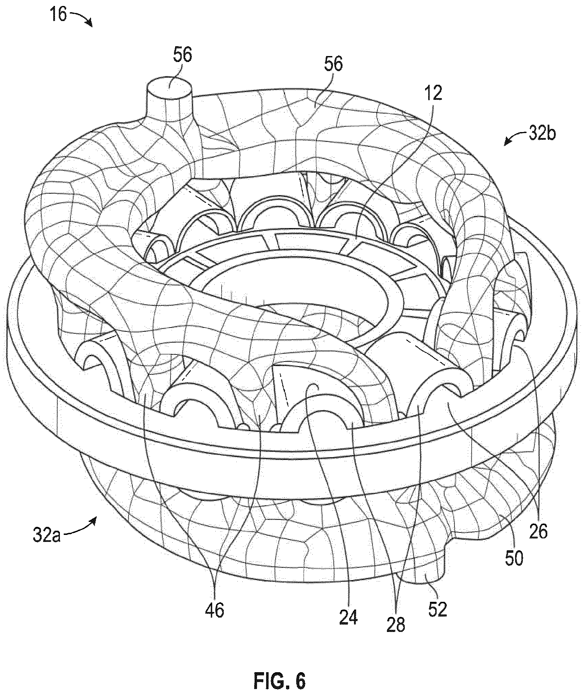

Referring now to FIG. 5, the plurality of cooling channels 46 are connected to an inlet header 50 located at a first axial stator end 32a. The inlet header 50 includes a fluid inlet 52 to receive the cooling fluid flow 48 and distribute the cooling fluid flow 48 to the plurality of cooling channels 46. Referring now to FIG. 6, the plurality of cooling channels 46 are connected to an outlet header 54 located at a second axial stator end 18b, opposite the first axial stator end 18a. The outlet header 54 collects the cooling fluid flow 48 from the plurality of cooling channels 46 and directs the cooling fluid flow 48 out of a fluid outlet 56 in the outlet header 54. The inlet header 50 and the outlet header 54 are configured and shaped to provide uniform cooling fluid flow 48 through the plurality of cooling channels 46.

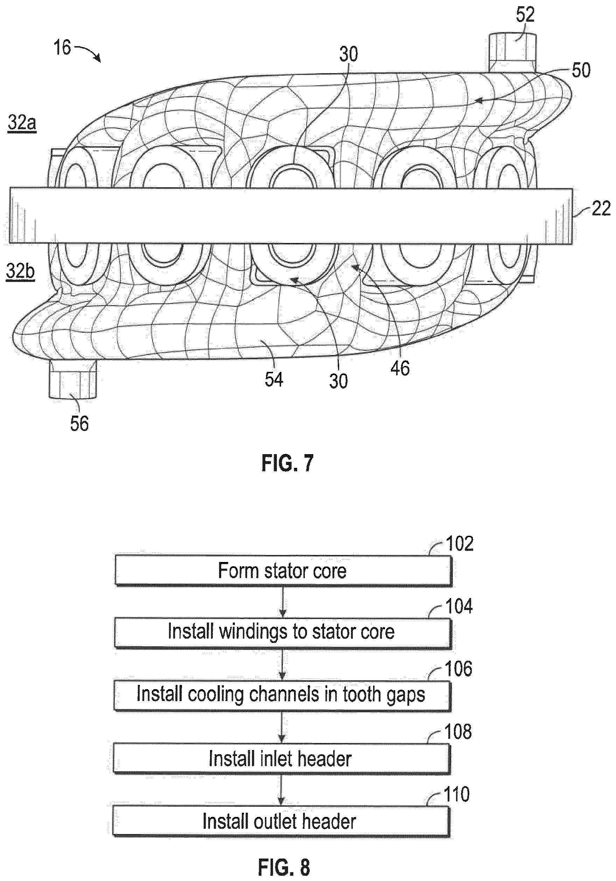

Referring now to FIG. 7, the inlet header 50 and the outlet header 54 are shaped to conform to the end turn segments 30 of the stator windings 24 to provide additional cooling to the end turn segments 30 via the cooling fluid flow 48 through the inlet header 50 and the outlet header 54. Further, the fluid inlet 52 and the fluid outlet 56 are circumferentially located (offset) 180 degrees apart to improve uniformity of the cooling fluid flow 48 through the plurality of cooling channels 46.

Referring again to FIG. 3a, in some configurations of stator 16 additional fluid cooling is desired in addition to that provided via cooling channels 46 located in the tooth gaps 42. In such configurations, tooth cooling channels 58 are provided in the stator teeth 36. The tooth cooling channels 58 are similarly connected to the inlet header 50 and the outlet header 54 to provide the cooling fluid flow 48 therethrough.

In some embodiments, the cooling channels 46, the inlet header 50 and the outlet header 54 are formed from a non-electrically conductive material, such as a polymer material. Examples of polymer materials that may be utilized in forming of the cooling channels 46 include the commercially available CE 221, EPX 82 and RPU 70. It is to be appreciated that these materials are merely exemplary, and one skilled in the art will readily appreciate that other materials may be utilized in the forming of the cooling channels 46. Further, in some embodiments, the cooling channels 46, the inlet header 50 and the outlet header are formed via one or more additive manufacturing processes.

In FIG. 8, an exemplary method 100 of manufacturing a stator 16 is illustrated. In step 102, the stator core 22 is formed by axially stacking the plurality of laminations 26. In step 104, the stator windings 24 are installed to the stator core 22. After installation of the stator windings 24, the cooling channels 46 are installed in the stator core 22, for example in the tooth gaps 42 between circumferentially adjacent core segments 28 and/or through the stator teeth 36 at step 106. The inlet header 50 in installed to the plurality of cooling channels 46 at step 108. Similarly, at step 110 the outlet header 54 is installed to the plurality of cooling channels 46. In some embodiments, the inlet header 50 or the outlet header 54 may be assembled to the plurality of cooling channels 46 prior to installation of the cooling channels into the stator core 22. In some embodiments and epoxy adhesive is utilized to secure the inlet header 50 and the outlet header 54 to the plurality of cooling channels 46. In still other embodiments, the inlet header 50 or the outlet header 54 may be formed as a single unitary component with the plurality of cooling channels 56. One skilled in the art will readily appreciate, however, that other securing means may be utilized.

The term "about" is intended to include the degree of error associated with measurement of the particular quantity based upon the equipment available at the time of filing the application. For example, "about" can include a range of ± 8% or 5%, or 2% of a given value.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A stator (16) for an electric motor comprising:
a stator core (22) including:
a rim (34); and
a plurality of stator teeth (36) extending from the rim, the plurality of stator teeth defining a plurality of tooth gaps (42) between circumferentially adjacent stator teeth;
a plurality of stator windings (24) wrapped along the plurality of stator teeth, the plurality of stator windings including:
a plurality of core segments (28) extending along the plurality of tooth gaps; and
a plurality of end turn segments (30) connecting adjacent core segments;
and
a plurality of non-electrically conductive cooling channels (46) disposed in the stator core, the plurality of cooling channels configured to direct a cooling fluid flow therethrough to cool the plurality of stator windings;
an inlet header (50) disposed at a first axial end of the stator including a fluid inlet (52), the inlet header fluidly connected to the plurality of cooling channels to direct the cooling fluid flow from the fluid inlet to the plurality of cooling channels; and
an outlet header (54) disposed at a second axial end of the stator opposite the first axial end including a fluid outlet (56), the outlet header fluidly connected to the plurality of cooling channels to direct the cooling fluid flow from the plurality of cooling channels to the fluid outlet;
wherein the plurality of cooling channels (46) and at least one of the inlet header (50) and the outlet header (54) are formed together as a single unitary component;
wherein each cooling channel (46) extends through a respective tooth gap (42);
wherein the fluid inlet (52) is circumferentially offset 180 degrees from the fluid outlet (56);
**characterised in that** the inlet header (50) includes:
a first inlet header arm extending circumferentially in a first direction from the fluid inlet (52) and terminating at a first arm end; and
a second header arm extending circumferentially in a second direction opposite the first direction from the fluid inlet (52) and terminating at a second arm end;
and **in that** the outlet header (54) includes:
a first outlet header arm extending circumferentially in a first direction from the fluid outlet (56) and terminating at a first arm end and
a second outlet header arm extending circumferentially in a second direction opposite the first from the fluid outlet (56) and terminating at a second arm end, wherein the plurality of end turn segments (30) are curvilinear, and wherein the inlet header (50) and the outlet header (54) are conformally shaped to the plurality of end turn segments (30) to cool the plurality of end turn segments (30).

2. The stator of claim 1, wherein the plurality of non-electrically conductive cooling channels (46) are formed from a polymeric material.

3. An electric motor (10) comprising:
a rotor (12) rotatable about a rotation axis;
a stator (16), as claimed in any preceding claim, disposed radially outboard of the rotor defining a radial air gap between the rotor and the stator.

4. A method of forming a stator for an electric motor, comprising:
installing a plurality of stator windings to a stator core, the stator core including a plurality of core teeth defining a plurality of tooth gaps therebetween; and
installing a plurality of non-electrically conductive cooling channels in the plurality of tooth gaps, the cooling channels configured to direct a cooling fluid flow therethrough to cool the plurality of stator windings;
securing an inlet header including a fluid inlet to the plurality of cooling channels at a first axial end of the stator; and
securing an outlet header including a fluid outlet to the plurality of cooling channels at a first axial end of the stator;
wherein the plurality of cooling channels and one or more of the inlet header or the outlet header are formed together as a single unitary component;
wherein each cooling channel (46) extends through a respective tooth gap (42);
wherein the fluid inlet (52) is circumferentially offset 180 degrees from the fluid outlet (56);
**characterised in that** the inlet header (50) includes:
a first header arm extending circumferentially in a first direction from the fluid inlet (52) and terminating at a first arm end; and
a second header arm extending circumferentially in a second direction opposite the first direction from the fluid inlet (52) and terminating at a second arm end;
and **in that** the outlet header (54) includes:
a first outlet header arm extending circumferentially in a first direction from the fluid outlet (56) and terminating at a first arm end and
a second outlet header arm extending circumferentially in a second direction opposite the first direction from the fluid outlet (56) and terminating at a second arm end,
wherein the plurality of end turn segments (30) are curvilinear, and wherein the inlet header (50) and the outlet header (54) are conformally shaped to the plurality of end turn segments (30) to cool the plurality of end turn segments (30).

5. The method of claim 4, further comprising securing the inlet header or the outlet header to the plurality of cooling channels via an epoxy material.

6. The method of claim 4, further comprising forming one or more of the plurality of cooling channels, the inlet header or the outlet header by one or more additive manufacturing processes.

7. The method of any of claims 4 to 6, further comprising forming one of the inlet header or the outlet header together with the plurality of cooling channels prior to installation of the plurality of cooling channels into the stator core.

## Patentansprüche

1. Ein Stator (16) für einen Elektromotor, umfassend:
einen Statorkern (22), der aufweist:
einen Rand (34); und
eine Vielzahl von Statorzähnen (36), die sich von dem Rand aus erstrecken, wobei die Vielzahl von Statorzähnen eine Vielzahl von Zahnlücken (42) zwischen in Umfangsrichtung benachbarten Statorzähnen definiert;
eine Vielzahl von Statorwicklungen (24), die entlang der Vielzahl von Statorzähnen gewickelt sind, wobei die Vielzahl von Statorwicklungen aufweist:
eine Vielzahl von Kernsegmenten (28), die sich entlang der Vielzahl von Zahnlücken erstrecken; und
eine Vielzahl von Endwindungssegmenten (30), die benachbarte Kernsegmente verbinden; und
eine Vielzahl von nicht elektrisch leitfähigen Kühlkanälen (46), die in dem Statorkern angeordnet sind, wobei die Vielzahl von Kühlkanälen dazu ausgebildet ist, einen Kühlfluidstrom hindurchzuleiten, um die Vielzahl von Statorwicklungen zu kühlen;
einen Einlasssammler (50), der an einem ersten axialen Ende des Stators angeordnet ist und einen Fluideinlass (52) aufweist, wobei der Einlasssammler mit der Vielzahl von Kühlkanälen fluidisch verbunden ist, um den Kühlfluidstrom von dem Fluideinlass zu der Vielzahl von Kühlkanälen zu leiten; und
einen Auslasssammler (54), der an einem zweiten axialen Ende des Stators gegenüber dem ersten axialen Ende angeordnet ist und einen Fluidauslass (56) aufweist, wobei der Auslasssammler mit der Vielzahl von Kühlkanälen fluidisch verbunden ist, um den Kühlfluidstrom von der Vielzahl von Kühlkanälen zu dem Fluidauslass zu leiten;
wobei die Vielzahl von Kühlkanälen (46) und mindestens einer von dem Einlasssammler (50) und dem Auslasssammler (54) zusammen als eine einzige einstückige Komponente ausgebildet sind;
wobei sich jeder Kühlkanal (46) durch eine jeweilige Zahnlücke (42) erstreckt;
wobei der Fluideinlass (52) in Umfangsrichtung um 180 Grad gegenüber dem Fluidauslass (56) versetzt ist:
**dadurch gekennzeichnet, dass** der Einlasssammler (50) aufweist:
einen ersten Einlasssammlerarm, der sich in Umfangsrichtung in einer ersten Richtung von dem Fluideinlass (52) aus erstreckt und an einem ersten Armende endet; und
einen zweiten Sammlerarm, der sich in Umfangsrichtung in einer zweiten Richtung entgegengesetzt zu der ersten Richtung von dem Fluideinlass (52) aus erstreckt und an einem zweiten Armende endet;
und dass der Auslasssammler (54) aufweist:
einen ersten Auslasssammlerarm, der sich in Umfangsrichtung in einer ersten Richtung von dem Fluidauslass (56) aus erstreckt und an einem ersten Armende endet; und
einen zweiten Auslasssammlerarm, der sich in Umfangsrichtung in einer zweiten Richtung entgegengesetzt zu der ersten von dem Fluidauslass (56) aus erstreckt und an einem zweiten Armende endet,
wobei die Vielzahl von Endwindungssegmenten (30) kurvenförmig ist, und wobei der Einlasssammler (50) und der Auslasssammler (54) konform zu der Vielzahl von Endwindungssegmenten (30) geformt sind, um die Vielzahl von Endwindungssegmenten (30) zu kühlen.

2. Der Stator nach Anspruch 1, wobei die Vielzahl von nicht elektrisch leitfähigen Kühlkanälen (46) aus einem polymeren Material gebildet ist.

3. Ein Elektromotor (10), umfassend:
einen Rotor (12), der um eine Drehachse drehbar ist;
einen Stator (16) nach einem der vorhergehenden Ansprüche, der radial außerhalb des Rotors angeordnet ist und einen radialen Luftspalt zwischen dem Rotor und dem Stator definiert.

4. Ein Verfahren zum Ausbilden eines Stators für einen Elektromotor, umfassend:
Installieren einer Vielzahl von Statorwicklungen an einem Statorkern, wobei der Statorkern eine Vielzahl von Kernzähnen aufweist, die eine Vielzahl von Zahnlücken dazwischen definieren; und
Installieren einer Vielzahl von nicht elektrisch leitfähigen Kühlkanälen in der Vielzahl von Zahnlücken, wobei die Kühlkanäle dazu ausgebildet sind, einen Kühlfluidstrom hindurchzuleiten, um die Vielzahl von Statorwicklungen zu kühlen;
Befestigen eines Einlasssammlers, der einen Fluideinlass aufweist, an der Vielzahl von Kühlkanälen an einem ersten axialen Ende des Stators; und
Befestigen eines Auslasssammlers, der einen Fluidauslass aufweist, an der Vielzahl von Kühlkanälen an einem ersten axialen Ende des Stators;
wobei die Vielzahl von Kühlkanälen und einer oder mehrere von dem Einlasssammler oder dem Auslasssammler zusammen als eine einzige einstückige Komponente ausgebildet sind;
wobei sich jeder Kühlkanal (46) durch eine jeweilige Zahnlücke (42) erstreckt;
wobei der Fluideinlass (52) in Umfangsrichtung um 180 Grad gegenüber dem Fluidauslass (56) versetzt ist;
**dadurch gekennzeichnet, dass** der Einlasssammler (50) aufweist:
einen ersten Sammlerarm, der sich in Umfangsrichtung in einer ersten Richtung von dem Fluideinlass (52) aus erstreckt und an einem ersten Armende endet; und
einen zweiten Sammlerarm, der sich in Umfangsrichtung in einer zweiten Richtung entgegengesetzt zu der ersten Richtung von dem Fluideinlass (52) aus erstreckt und an einem zweiten Armende endet;
und dass der Auslasssammler (54) aufweist:
einen ersten Auslasssammlerarm, der sich in Umfangsrichtung in einer ersten Richtung von dem Fluidauslass (56) aus erstreckt und an einem ersten Armende endet; und
einen zweiten Auslasssammlerarm, der sich in Umfangsrichtung in einer zweiten Richtung entgegengesetzt zu der ersten Richtung von dem Fluidauslass (56) aus erstreckt und an einem zweiten Ende endet,
wobei die Vielzahl von Endwindungssegmenten (30) kurvenförmig ist, und wobei der Einlasssammler (50) und der Auslasssammler (54) konform zu der Vielzahl von Endwindungssegmenten (30) geformt sind, um die Vielzahl von Endwindungssegmenten (30) zu kühlen.

5. Das Verfahren nach Anspruch 4, ferner umfassend das Befestigen des Einlasssammlers oder des Auslasssammlers an der Vielzahl von Kühlkanälen über ein Epoxidmaterial.

6. Das Verfahren nach Anspruch 4, ferner umfassend das Ausbilden eines oder mehrerer von der Vielzahl von Kühlkanälen, dem Einlasssammler oder dem Auslasssammler durch eines oder mehrere additive Fertigungsverfahren.

7. Das Verfahren nach einem der Ansprüche 4 bis 6, ferner umfassend das Ausbilden eines von dem Einlasssammler oder dem Auslasssammler zusammen mit der Vielzahl von Kühlkanälen vor der Installation der Vielzahl von Kühlkanälen in den Statorkern.

## Revendications

1. Un stator (16) pour un moteur électrique comprenant :
un noyau de stator (22) comprenant :
une jante (34) ; et
une pluralité de dents de stator (36) s'étendant depuis la jante, la pluralité de dents de stator définissant une pluralité d'intervalles entre dents (42) entre des dents de stator circonférentiellement adjacentes ;
une pluralité d'enroulements de stator (24) enroulés le long de la pluralité de dents de stator, la pluralité d'enroulements de stator comprenant :
une pluralité de segments de noyau (28) s'étendant le long de la pluralité d'intervalles entre dents ; et
une pluralité de segments de tête de bobine (30) reliant des segments de noyau adjacents ; et
une pluralité de canaux de refroidissement non électriquement conducteurs (46) disposés dans le noyau de stator, la pluralité de canaux de refroidissement étant configurée pour diriger un écoulement de fluide de refroidissement à travers ceux-ci afin de refroidir la pluralité d'enroulements de stator ;
un collecteur d'entrée (50) disposé à une première extrémité axiale du stator comprenant une entrée de fluide (52), le collecteur d'entrée étant relié fluidiquement à la pluralité de canaux de refroidissement afin de diriger l'écoulement de fluide de refroidissement depuis l'entrée de fluide vers la pluralité de canaux de refroidissement ; et
un collecteur de sortie (54) disposé à une seconde extrémité axiale du stator opposée à la première extrémité axiale comprenant une sortie de fluide (56), le collecteur de sortie étant relié fluidiquement à la pluralité de canaux de refroidissement afin de diriger l'écoulement de fluide de refroidissement depuis la pluralité de canaux de refroidissement vers la sortie de fluide ;
dans lequel la pluralité de canaux de refroidissement (46) et au moins l'un parmi le collecteur d'entrée (50) et le collecteur de sortie (54) sont formés ensemble en un seul composant unitaire ;
dans lequel chaque canal de refroidissement (46) s'étend à travers un intervalle entre dents respectif (42) ;
dans lequel l'entrée de fluide (52) est décalée circonférentiellement de 180 degrés par rapport à la sortie de fluide (56) ;
**caractérisé en ce que** le collecteur d'entrée (50) comprend :
un premier bras de collecteur d'entrée s'étendant circonférentiellement dans une première direction depuis l'entrée de fluide (52) et se terminant à une première extrémité de bras ; et
un second bras de collecteur s'étendant circonférentiellement dans une seconde direction opposée à la première direction depuis l'entrée de fluide (52) et se terminant à une seconde extrémité de bras ;
et **en ce que** le collecteur de sortie (54) comprend :
un premier bras de collecteur de sortie s'étendant circonférentiellement dans une première direction depuis la sortie de fluide (56) et se terminant à une première extrémité de bras ; et
un second bras de collecteur de sortie s'étendant circonférentiellement dans une seconde direction opposée à la première depuis la sortie de fluide (56) et
se terminant à une seconde extrémité de bras, dans lequel la pluralité de segments de tête de bobine (30) sont curvilignes, et dans lequel le collecteur d'entrée (50) et le collecteur de sortie (54) sont conformés de manière conforme à la pluralité de segments de tête de bobine (30) afin de refroidir la pluralité de segments de tête de bobine (30).

2. Le stator selon la revendication 1, dans lequel la pluralité de canaux de refroidissement non électriquement conducteurs (46) sont formés à partir d'un matériau polymère.

3. Un moteur électrique (10) comprenant :
un rotor (12) rotatif autour d'un axe de rotation ;
un stator (16), selon l'une quelconque des revendications précédentes, disposé radialement vers l'extérieur par rapport au rotor en définissant un entrefer radial entre le rotor et le stator.

4. Un procédé de formation d'un stator pour un moteur électrique, comprenant :
l'installation d'une pluralité d'enroulements de stator sur un noyau de stator, le noyau de stator comprenant une pluralité de dents de noyau définissant une pluralité d'intervalles entre dents entre celles-ci ; et
l'installation d'une pluralité de canaux de refroidissement non électriquement conducteurs dans la pluralité d'intervalles entre dents, les canaux de refroidissement étant configurés pour diriger un écoulement de fluide de refroidissement à travers ceux-ci afin de refroidir la pluralité d'enroulements de stator ;
la fixation d'un collecteur d'entrée comprenant une entrée de fluide à la pluralité de canaux de refroidissement à une première extrémité axiale du stator ; et
la fixation d'un collecteur de sortie comprenant une sortie de fluide à la pluralité de canaux de refroidissement à une première extrémité axiale du stator ;
dans lequel la pluralité de canaux de refroidissement et un ou plusieurs parmi le collecteur d'entrée ou le collecteur de sortie sont formés ensemble en un seul composant unitaire ;
dans lequel chaque canal de refroidissement (46) s'étend à travers un intervalle entre dents respectif (42) ;
dans lequel l'entrée de fluide (52) est décalée circonférentiellement de 180 degrés par rapport à la sortie de fluide (56) ;
**caractérisé en ce que** le collecteur d'entrée (50) comprend :
un premier bras de collecteur s'étendant circonférentiellement dans une première direction depuis l'entrée de fluide (52) et se terminant à une première extrémité de bras ; et
un second bras de collecteur s'étendant circonférentiellement dans une seconde direction opposée à la première direction depuis l'entrée de fluide (52) et se terminant à une seconde extrémité de bras ;
et **en ce que** le collecteur de sortie (54) comprend :
un premier bras de collecteur de sortie s'étendant circonférentiellement dans une première direction depuis la sortie de fluide (56) et se terminant à une première extrémité de bras ; et
un second bras de collecteur de sortie s'étendant circonférentiellement dans une seconde direction opposée à la première direction depuis la sortie de fluide (56) et se terminant à une seconde extrémité de bras, dans lequel la pluralité de segments de tête de bobine (30) sont curvilignes, et dans lequel le collecteur d'entrée (50) et le collecteur de sortie (54) sont conformés de manière conforme à la pluralité de segments de tête de bobine (30) afin de refroidir la pluralité de segments de tête de bobine (30).

5. Le procédé selon la revendication 4, comprenant en outre la fixation du collecteur d'entrée ou du collecteur de sortie à la pluralité de canaux de refroidissement par l'intermédiaire d'un matériau époxy.

6. Le procédé selon la revendication 4, comprenant en outre la formation d'un ou plusieurs parmi la pluralité de canaux de refroidissement, le collecteur d'entrée ou le collecteur de sortie par un ou plusieurs procédés de fabrication additive.

7. Le procédé selon l'une quelconque des revendications 4 à 6, comprenant en outre la formation de l'un parmi le collecteur d'entrée ou le collecteur de sortie conjointement avec la pluralité de canaux de refroidissement avant l'installation de la pluralité de canaux de refroidissement dans le noyau de stator.
